(19) Europäisches Patentamt
European Patent Office
Office européen des brevets

(11) **EP 3 685 196 B1**

(12) **EUROPEAN PATENT SPECIFICATION**

(45) Date of publication and mention of the grant of the patent:
**02.11.2022   Bulletin 2022/44**

(21) Application number: **18786535.7**

(22) Date of filing: **24.09.2018**

(51) International Patent Classification (IPC):
*E21B 47/005* (2012.01)      *G01V 5/04* (2006.01)
*G01V 1/50* (2006.01)      *G01V 5/08* (2006.01)
*G01V 5/14* (2006.01)      *G01V 11/00* (2006.01)

(52) Cooperative Patent Classification (CPC):
**E21B 47/005; G01V 1/50; G01V 5/04; G01V 5/08; G01V 5/14; G01V 11/00;** G01V 2210/6169; G01V 2210/6224; G01V 2210/6226

(86) International application number:
**PCT/US2018/052422**

(87) International publication number:
**WO 2019/060825 (28.03.2019 Gazette 2019/13)**

(54) **METHOD FOR USING VOXELATED X-RAY DATA TO ADAPTIVELY MODIFY ULTRASOUND INVERSION MODEL GEOMETRY DURING CEMENT EVALUATION**

VERFAHREN ZUR VERWENDUNG VON VOXELIERTEN RÖNTGENDATEN ZUR ADAPTIVEN MODIFIKATION DER ULTRASCHALLINVERSIONSMODELLGEOMETRIE WÄHREND DER ZEMENTAUSWERTUNG

PROCÉDÉ D'UTILISATION DE DONNÉES DE RAYONS X VOXELISÉS POUR MODIFIER DE MANIÈRE ADAPTATIVE UNE GÉOMÉTRIE DE MODÈLE D'INVERSION ULTRASONORE PENDANT L'ÉVALUATION DU CIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.09.2017   US 201762561739 P**

(43) Date of publication of application:
**29.07.2020   Bulletin 2020/31**

(73) Proprietor: **Teague, Philip**
**Spring, TX 77386 (US)**

(72) Inventor: **Teague, Philip**
**Spring, TX 77386 (US)**

(74) Representative: **Schneiders & Behrendt Bochum**
**Huestraße 23**
**44787 Bochum (DE)**

(56) References cited:
**WO-A1-2016/040133**      **WO-A1-2016/040141**
**WO-A1-2017/023282**      **US-A- 5 274 604**
**US-A1- 2014 052 376**

## Description

### Technical Field

The present invention relates generally to the monitoring and determination of cement integrity, zonal isolation and well integrity, within cemented single or multi-string wellbore environments, and in a particular though non-limiting embodiment to a method of using three-dimensional x-ray-based data and/or neutron porosity data to inform the inversion of ultrasound data collected from the same borehole.

### Background

Within the oil & gas industry, the requirement to gauge the quality of cement through multiple casings is paramount as is the ability to determine the status of the annuli. The industry currently employs various methods for the verification of the hydraulic seal behind a single casing string. Typically, ultrasonic tools are run within the well to determine whether cement is bonded to the outside of the casing, thereby indicating the presence of cement in the annulus between the casing and formation, or between the casing and an outer casing. Ultimately, a leak-off (pressure) test is required to ensure that zonal isolation has been achieved as ultrasonic tools are highly dependent upon quality of the casing, the bond between the casing and the material in the annulus, and the mechanical properties of the material in the annulus to be able to work correctly. In addition, ultrasonic tools treat the material in the annulus as a single isotropic and homogenous volume, any actual deviation away from this ideal leads to inaccuracies in the measurement.

Cement bond logs (CBL) are still run today because they are relatively inexpensive and almost every wireline company has a version of the tool. The logs typically illustrate the use of the acoustic amplitude curve to indicate cement bond integrity. In a CBL log in well bonded cement, low amplitude generally indicates the presence of a good bond. Most logs run today have additional computed curves, as well as a Variable Density Log display of the acoustic waveforms.

The CBL uses conventional sonic log principals of refraction to make its measurements. The sound travels from the transmitter, through the mud, refracts along the casing-mud interface and then refracts back to the receivers. In fast formations (faster than the casing), the signal travels up the cement-formation interface, and arrives at the receiver before the casing refraction. The amplitude is typically recorded on the log in millivolts, or as attenuation in decibels/foot (db/ft), or as bond index, or any two or three of these. A travel time curve is also presented. It is used as a quality control curve. A straight line indicates no cycle skips or formation arrivals, so the amplitude value is reliable. Skips may indicate poor tool centralization or poor choice for the trigger threshold.

The actual value measured is the signal amplitude, measured in millivolts. Attenuation is calculated by the service company based on its tool design, casing diameter, and transmitter to receiver spacing.

Compressive strength of the cement is derived from the attenuation with a correction for casing thickness. Finally, bond index is calculated by the equation:

$$BI = A / A_{max}$$

Where:

$$A = \text{Attenuation at any point on the log (db/ft)}$$

$$A_{max} = \text{Maximum attenuation (db/ft)}$$

While the important results of a CBL are easily seen on a conventional CBL log display, such as signal amplitude, attenuation, bond index, and cement compressional strength, an additional display track is normally provided. This is the variable density display (VDL) of the acoustic waveforms, which provides a visual indication of free or bonded pipe (as do the previously mentioned curves) but also show the effects of fast formations, and decentralized pipe. The display is created by transforming the sonic waveform at every depth level to a series of white-grey-black shades that represent the amplitude of each peak and valley on the waveform. Zero amplitude is grey, negative amplitude is white, and positive amplitude is black. Intermediate amplitudes are illustrated as intermediate shades of grey.

The ultrasonic imaging technique produces acoustic borehole imaging logs. The ultrasonic imaging technique is a cased hole cement bond / cement mapping tool, but with more complete coverage of the borehole. This tool type is sometimes referred to as a rotating-head bond tool. In addition, precise acoustic measurements of the internal dimensions of the casing and of its thickness provide a map-like presentation of casing condition including internal and external damage or deformation. Rotating head ultrasonic (acoustic) imaging tools are the current state of the art for cement and casing integrity mapping. The typically tool sonde includes a rotating transducer subassembly available in different sizes to log all normal casing sizes. The direction of rotation of the subassembly controls the orientation of the transducer - counterclockwise for the standard measurement mode (so that the transducer facing is the casing or the borehole wall), and clockwise to turn the transducer 180 degrees within its subassembly (so that the transducer is facing a reflection plate within the tool) to measure downhole fluid properties. The fluid properties are used to correct the basic measurements for environmental conditions.

Analysis of the reflected ultrasonic waveforms provides information about the acoustic impedance of the material immediately behind the casing. A cement map presents a visual indicator of cement quality.

Current methods can offer information regarding the cement bond of the inner-most casing, yet do not have the ability to discriminate various depths into the cement or annular material. This can lead to the possibility that fluid-migration paths may exist at the cement-formation boundary, within the cement itself, or between the casing and an outer casing, thereby leading to a loss of zonal isolation. One reason for this is the use of a mathematical model, which describes mechanical properties (such as the speed of sound) associated with the material. Typically, however, these models are simplified and assume the casing is concentric and coaxial within the borehole (or other casings), and that the density of the material is homogeneous through the 360 degree azimuthal region of the cement/material in the annulus.

The use of the ultrasonic waveforms may be used to evaluate the quality of the cement or annular materials located between casing and a formation, or between the casing and a further casing. Further, ultrasonic logging may be used for flaw detection in the cement by determining whether material behind the casing is solid or fluid, based upon the time of arrival of reflected signals. A logging tool, which may have one or more ultrasonic transmitters and one or more ultrasonic receivers, is lowered into a wellbore and measurements are taken at various depths. Ultrasonic waves are transmitted from the logging tool towards the formation, and reflected from the casing, cement sheath, and formation. The reflected waves are received, recorded, processed, and interpreted to determine the presence, or lack thereof, of cement between the casing and the formation or other wellbore wall.

The ultrasonic waveform can then be used to evaluate the cement bond by determining the impedance of the material next to the casing itself. The impedance is a function of both bulk density and the speed of sound of the drilling fluid, casing, cement, and formation. The impedance is mathematically calculated using estimated properties of the casing, cement, mud and other materials in a complicated method requiring extensive knowledge of the well make-up for a particular well. Typically, the mathematical model assumes that the well casing is coaxial and concentric, and that the cement volume is complete (e.g., between the casing and formation, or between an outer casing and an inner casing) and the material homogenous. Any deviation from this ideal will form the basis for 'interpreted anomalies' within the cement. However, in practice, the casings are seldom perfectly coaxial and concentric, and the cement density varies anisotropically due to the uniformity of the lay-up and curing. As a result, the ultrasonic interpretation is inferred and based upon an idealized model, which, when compared to real-life geometries, lead to false positives that degrade the quality of the resulting interpretation.

Generally, traditional ultrasonic logging techniques can only provide the acoustic impedance of the material behind the casing. It is a challenge for ultrasonic logging to fully invert related important material properties, such as material velocity and density. Moreover, ultrasonic logging tools are not capable of discriminating the size of any gap or channel present in the cement volume. For example, a void between the casing and the cement sheath will give the same reading regardless of whether the void is a millimeter thick or several centimeters thick.

If a method could be established to determine the geometry of the materials in the annulus, then an adaptive ultrasound inversion model could be employed as function of depth. The inversion could then be adaptively modified such that the inversion is based upon an accurate geometry, and therefore, present a much more accurate interpretation of the result.

Prior art teaches a variety of techniques that use ultrasound, x-rays, neutrons or other radiant energy to inspect or obtain information about the structures within or surrounding the borehole of a water, oil or gas well, yet none teach of a method or means to use said x-ray and/or neutron porosity data to geometrically inform the inversion of ultrasound data, such that the quality of the result can be improved through implementation of an accurate three dimensional geometric model.

US 2018/0180765 A1 teaches a method and means for improving the resolution and determination of the density of the materials surrounding a wellbore in a package that does not require direct physical contact with the well casings (i.e., non-padded). The invention comprises a method and means to use a pseudo-conical x-ray beam, located within a non-padded, concentrically-located borehole logging tool for the purpose of detecting density variations within the annular materials surrounding a borehole within single or multi-string cased-hole environments. The arrangement of the collimated detectors permits the collection of data that relates specifically to known azimuthal and radially located regions of interaction (azimuthally distributed depths of investigation). When the tool is moved axially within the well, a three-dimensional map of the densities of the annular materials surrounding the borehole is created such that variations in the density of the annular materials can be analyzed to look for issues with cement integrity and zonal isolation, such as channels, or holes in the annular materials that could transmit pressure.

US 2018/0188411 A1 teaches methods and means for improving the resolution and determination of the density of the materials surrounding a wellbore, in a package requiring no direct physical contact with the well casings (*i.e.*, non-padded). The method and means disclosed herein comprise using an actuated combination of collimators located cylindrically around an x-ray source, located within a non-padded concentrically-located borehole logging tool, for detecting density variations within the annular materials surrounding a borehole within single or multi-string cased-hole environments. The actuation of collimators permits the operator to choose between a fixed collimator mode in which the output is an azimuthal array of a plurality of x-ray beams, and an actuated collimator mode in which a single or plurality of individual azimuthally-arranged x-ray beams scan azimuthally through the rotation of one of the collimators. In addition, the actuation permits the operator to select a further non-rotating-mode in which the collimator sleeve switches among various angles or declinations of x-ray beam outputs with respect to the major axis of the tool.

US 7,705,294 B2 teaches an apparatus that measures backscattered x-rays from the inner layers of a borehole in selected radial directions, with the missing segment data being populated through movement of the apparatus through the borehole. The apparatus permits generation of data for a two-dimensional reconstruction of the well or borehole.

US 9,817,152 B2 teaches a method and means to create a three-dimensional map of cement, casings and formation surrounding a cased borehole, using x-ray radiation to illuminate the casings, annular materials and formation. Further, it teaches a means for producing a voxelated map that contains axial, radial and azimuthal density variations, and thereby the geometry and form of the cement surrounding the cased hole.

WO 2017/023282 A1 discloses a method of using x-ray density data to determine the most probable attenuation properties of the material isotropically surrounding a cased wellbore, such that the speed of sound of the material can be used to inform the inversion of ultrasound data as a function of depth. The technique assumes that the x-ray density data provided for the cement, represented by a single azimuth (*i.e.*, looking radially outward in one direction) is representative of the cement in all directions, and at all radial depths into the cement. As such, the technique only uses x-ray data to determine the cement density on the assumption that it is isotropic and homogenous, and that the casing itself is perfectly coaxial and concentric within the borehole and/or other casings.

WO 2014/186640 A2 discloses methods and means for evaluating proper cement installation in a well. The method includes receiving acoustic cement evaluation data having a first parameterization. At least a portion of the entire acoustic cement evaluation data may be corrected to account for errors in the first parameterization, thereby obtaining corrected acoustic cement evaluation data. This corrected acoustic cement evaluation data may be processed with an initial solid-liquid-gas model before performing a posteriori refinement of the initial solid-liquid-gas model, thereby obtaining a refined solid-liquid-gas model. A well log track-indicating whether a material behind the casing is a solid, liquid, or gas may be generated by processing the corrected acoustic cement evaluation data using the refined solid-liquid-gas model.

US 2014/0052376 A1 discloses a method for evaluating cement quality in a cased well. A single azimuth density log of the well is obtained using, for example, gamma ray sources and detectors. The detector count rates are inverted to provide initial estimates of cement density and thickness in a single azimuth. Acoustic waveform data are obtained from the well using an acoustic logging tool. The acoustic data are inverted, using the initial estimates of cement density and thickness obtained from the density logs wherein the model is assumed to be coaxial and homogeneous, and an updated density log is inferred. Cement 'images' are obtained from the updated density log, and cement bond quality can be estimated. It fails to teach of using x-ray data with azimuthal and radial resolution components to inform the variation in attenuation properties, as a function of volume, of the materials surrounding the cased borehole, It also fails to teach of a method or means to use said x-ray and/or neutron porosity data to inform the inversion of ultrasound data, such that the quality of the result can be improved through implementation of an accurate three dimensional geometric model.

US 6,876,721 B2 discloses a method to correlate information taken from a core-sample with information from a borehole density log. The core-sample information is derived from a CT scan of the core-sample, whereby the x-ray source and detectors are located on the outside of the sample, and thereby configured as an outside-looking-in arrangement. Various kinds of information from the CT scan such as its bulk density is compared to and correlated with the log information.

US 4,464,569 A discloses a method for determining the elemental composition of earth formations surrounding a well borehole by processing detected neutron capture gamma radiation emanating from the earth formation after neutron irradiation of the earth formation by a neutron spectroscopy logging tool.

US 5,081,611 A discloses a method of back projection to determine acoustic physical parameters of the earth formation longitudinally along the borehole using a single ultrasonic transducer and a number of receivers, which are distributed along the primary axis of the tool.

US 8,481,919 B2 teaches of a method of producing Compton-spectrum radiation in a borehole without the use of radioactive isotopes, and further describes rotating collimators around a fixed source installed internally to the apparatus, but does not have solid-state detectors with collimators. It further teaches of the use of conical and radially symmetrical anode arrangements to permit the production of panoramic x-ray radiation.

US 2013/0009049 A1 discloses an apparatus that allows measurement of backscattered x-rays from the inner layers of a borehole.

US 8,138,471 A1 discloses a scanning-beam apparatus based on an x-ray source, a rotatable x-ray beam collimator, and solid-state radiation detectors enabling the imaging of only the inner surfaces of borehole casings and pipelines.

US 3,976,879 A discloses a borehole logging tool that detects and records the backscattered radiation from the formation surrounding the borehole by means of a pulsed electromagnetic energy or photon source, so that characteristic information may be represented in an intensity versus depth plot format. The reference fails to teach of using x-ray data with azimuthal and radial resolution components to inform the variation in attenuation properties, as a function of volume, of the materials surrounding the cased borehole, It also fails to disclose a method or means to use the x-ray and/or neutron porosity data to inform the inversion of ultrasound data, such that the quality of the result can be improved through implementation of an accurate three-dimensional geometric model.

US 4,883,956 A discloses an apparatus and methods for investigation of subsurface earth formations, using an apparatus adapted for movement through a borehole. Depending upon the formation characteristic or characteristics to be measured, the apparatus may include a natural or artificial radiation source for irradiating the formations with penetrating radiation such as gamma rays, x-rays or neutrons. The light produced by a scintillator in response to detected radiation is used to generate a signal representative of at least one characteristic of the radiation and this signal is recorded.

US 6,078,867 A discloses a method for generating a three-dimensional graphical representation of a borehole, comprising the steps of: receiving caliper data relating to the borehole, generating a three-dimensional wire mesh model of the borehole from the caliper data, and color mapping the three-dimensional wire mesh model from the caliper data based on either borehole form, rugosity and/or lithology. WO 2016/040133 A1 describes improved methods and systems for cement evaluation and characterization in multiple casing strings that use sonic, ultrasonic, density, and neutron tools to provide a more direct and accurate measurement of the integrity of the cement bond through the evaluation of cement-casing interface density and annular equivalent density due to the presence of water, oil or gas.

## Summary

An arrangement according to claim 1 is provided.

A method according to claim 4 is provided.

## Brief Description of the Drawings

Fig. 1 illustrates an ultrasonic wellbore tool combined with an x-ray-based wellbore tool being lowered into a well by means of wireline conveyance, in addition to the cement masses surrounding the cased wellbore.

Fig 2. illustrates one example of how ultrasound data is typically inverted based upon a highly homogeneous and radially symmetric model, to produce a data log or cement 'image'.

Fig. 3 illustrates one example of how ultrasound data mat inverted based upon an adaptive model, the geometry of which has been informed by the three-dimensional cement density data provided by x-ray cement evaluation logs, to produce a more accurate data log or cement 'image.'

## Brief Description of Several Example Embodiments

The methods described herein use the output of an x-ray-based borehole cement logging/mapping tool to inform the inversion model geometry used to invert the raw data collected by an acoustic/ultrasonic tool deployed to collect data within the same borehole.

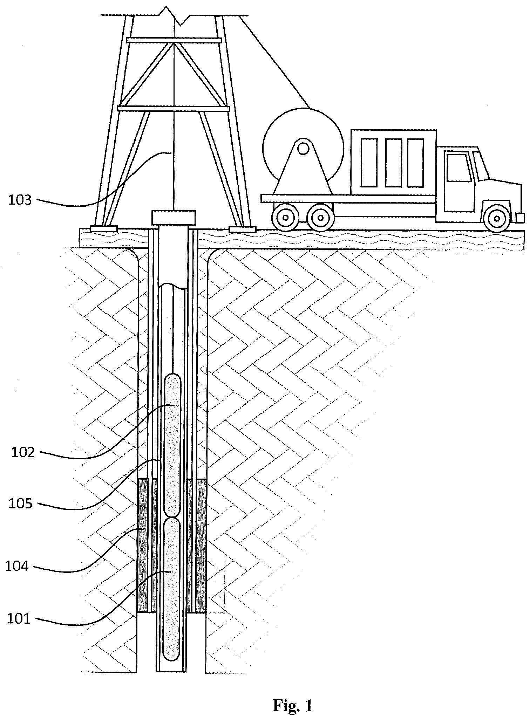

With reference now to Fig. 1, an example embodiment comprising an ultrasonic tool 101 is deployed into a borehole upon the same string as a x-ray-based cement evaluation tool 102, or a x-ray-based borehole mapping tool, or an isotope-based cement evaluation tool, or an isotope-based borehole mapping tool. The ultrasonic logging tool 101 is accompanied by an x-ray cement evaluation and neutron porosity tool 102 by wireline conveyance 103 into a cased borehole, wherein the cemented section of the well 104 is logged through the inner-most casing or tubing 105.

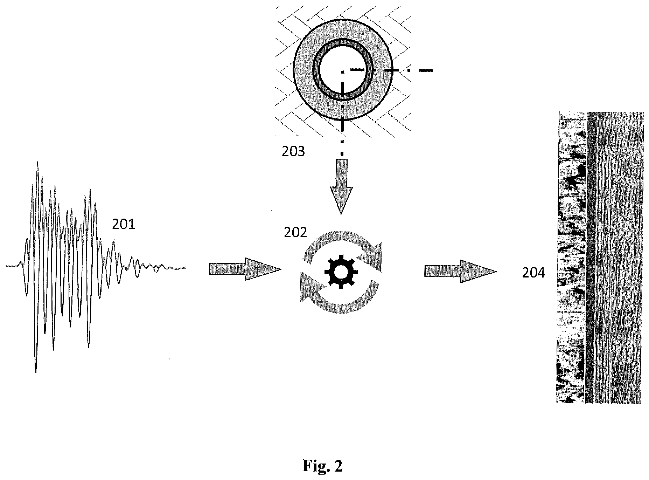

The example of Fig. 2 illustrates how during a typical ultrasound inversion, the raw ultrasound log data 201 is inverted and processed 202 through the use of a geometric model 203 which assumes the geometry of the casing, cement, and formation, along with their mechanical properties. The geometric model 203 is not adapted to the well geometry, such that the eccentricity of the casing, ovality of the casing, or ovality of the wellbore itself, as a function of depth, is not considered. The mechanical properties include acoustic impedance coefficients which are used the match the empirically collected speed of sound (time of flight) data and signal attenuation, such that the actual mechanical properties of the cement can be determined to produce an image of cement homogeneity as a function of depth 204. The output is typically represented as an ultrasonic image or variable density display 204.

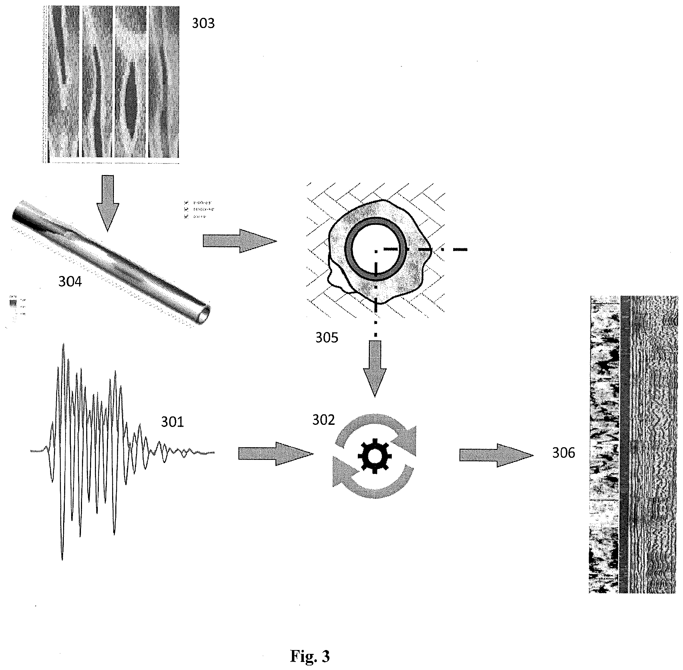

The example embodiment of Fig. 3 illustrates how raw ultrasound log data 301 may inverted and processed 302 through the use of a geometric model 305 which is unique for each depth interval (measurement according to logged depth). Three-dimensional x-ray density logs 303 are processed to create a voxelated three-dimensional density map of the cement as a function of depth 304. The result is an accurate model including actual cement geometries, three-dimensional density variations, and any casing or formation eccentricities - which is computed for each depth interval. Acoustic impedance properties can be created from comparison with a database of known cement impedances for a known density, and the three-dimensional density model 305 reprocessed as necessary to create a three-dimensional model of acoustic impedance variations. As such, the model 305 which serves to inform the inversion 302 is based upon the physical geometries and attributes of the well that has been logged. The output is typically represented as an ultrasonic image or variable density display 306 that has now been corrected for wellbore geometry variations (as a function of depth) by use of the three-dimensional x-ray data.

Raw ultrasound log data 301 is inverted and processed 302 through the use of a geometric model 305 which is unique for each depth interval. Three-dimensional x-ray density logs 303 are processed along with neutron porosity logs to ensure that regions of the x-ray data which indicate a void or channel can be further corroborated by a relative increase in cement porosity (in the near-field region surrounding the casing). The three-dimensional x-ray density logs 303 once pre-processed to create a voxelated three-dimensional density map of the cement as a function of depth 304, are enhanced by the accuracy or confidence-interval of which has been improved dramatically by automated/processed comparison with neutron-porosity logs. The result is an accurate model including actual cement geometries, three-dimensional density variations (corroborated with porosity data), and any casing or formation eccentricities computed for each depth interval. Acoustic impedance properties can be created from comparison with a database of known cement impedances for a known density, and the three-dimensional density model 305 reprocessed as necessary to create a three-dimensional model of acoustic impedance variations. As such, the model 305 which serves to inform the inversion 302 is based upon the physical geometries and attributes of the well that has been logged. The output is typically represented as an ultrasonic image or variable density display 306.

Machine learning can be employed to analyze the results of the inversion and quality index flags (produced from the inversion) to determine whether the selection of mechanical properties a specific cement depth interval was optimal, or whether the result would have a higher confidence level if an alternative set of cement characteristics had been used for the adaptive model.

Machine learning can be employed to analyze the results of the inversion and quality index flags (produced from the inversion) to determine whether the three dimensional density model geometry adequately matches the anticipated results of the acoustic inversion - and to what degree other, alternative geometric model interpretations of the x-ray or neutron data would better fit the model behavior, thereby serving as an additional re-processing step for the ultrasound inversion.

In another embodiment, the data collected was from borehole tools deployed by wireline.

In a still further embodiment, the data collected was from borehole tools deployed by logging-while-drilling.

**Claims**

1. Arrangement for monitoring and determination of cement integrity, zonal isolation and well integrity within cemented single or multi-string wellbore environments comprising a borehole tool comprising an ultrasonic logging tool (101) and an x-ray cement evaluation and neutron porosity tool (102) deployed on the same string in a borehole cased with cement,

   wherein the ultrasonic logging tool is configured to produce raw ultrasound log data (301) and the x-ray cement evaluation and neutron porosity tool is configured to produce x-ray three-dimensional density log data (303) and neutron porosity log data and
   wherein the arrangement is **characterised in that** it further comprises:

   at least one mechanism for processing the three-dimensional x-ray density log data with neutron porosity log data to obtain a three-dimensional geometric density model (305) of the cement as a function of depth;
   at least one mechanism for processing the three-dimensional density model (305) to obtain a three-dimensional acoustic impedance model; and,

at least one mechanism for inverting and processing (302) the raw ultrasound log data using said three-dimensional geometric density model (305).

2. The arrangement of claim 1, wherein said borehole tool is a wireline-based tool.

3. The arrangement of claim 1, wherein said borehole tool is a logging-while-drilling-based tool.

4. Method for monitoring and determination of cement integrity, zonal isolation and well integrity within cemented single or multi-string wellbore environments using raw ultrasound log data (301) from and ultrasonic logging tool and x-ray three-dimensional density log data (303) and neutron porosity log data from an x-ray cement evaluation and neutron porosity tool wherein both tools are comprised in a borehole tool and deployed on the same string in a borehole cased with cement,
   wherein the method is **characterised in that** it comprises the steps of:

   processing the three-dimensional x-ray density log data with neutron porosity log data to obtain a three-dimensional geometric density model (305) of the cement as a function of depth;
   processing the three-dimensional density model (305) to obtain a three-dimensional acoustic impedance model;
   inverting and processing (302) the raw ultrasound log data using said three-dimensional geometric density model (305).

5. The method of claim 4, wherein said borehole tool is a wireline-based tool.

6. The method of claim 4, wherein said borehole tool is a logging-while-drilling-based tool.


**Patentansprüche**

1. Anordnung zur Überwachung und Bestimmung der Zementintegrität, Zonenisolierung und Bohrlochintegrität innerhalb von zementierten Bohrlochumgebungen mit einem oder mehreren Strängen, aufweisend ein Bohrlochwerkzeug, das ein Ultraschallerfassungswerkzeug (101) und ein Röntgenzementauswertungs- und Neutronenporositätswerkzeug (102), die auf demselben Strang in einem Bohrloch eingesetzt werden, das mit Zement verrohrt ist,

   wobei das Ultraschallerfassungswerkzeug konfiguriert ist, um Ultraschallerfassungslog-Rohdaten (301) zu produzieren, und das Röntgenzementauswertungs- und Neutronenporositätswerkzeug konfiguriert ist, um dreidimensionale Röntgendichteerfassungsdaten (303) und Neutronenporositätserfassungsdaten zu produzieren, und
   wobei die Anordnung **dadurch gekennzeichnet ist, dass** sie ferner Folgendes umfasst:

   mindestens einen Mechanismus zum Verarbeiten der dreidimensionalen Röntgendichteerfassungsdaten mit Neutronenporositätserfassungsdaten, um ein dreidimensionales geometrisches Dichtemodell (305) des Zements als Funktion der Tiefe zu erhalten;
   mindestens einen Mechanismus zum Verarbeiten des dreidimensionalen Dichtemodells (305), um ein dreidimensionales akustisches Impedanzmodell zu erhalten; und
   mindestens einen Mechanismus zum Invertieren und Verarbeiten (302) der Ultraschallerfassungslog-Rohdaten unter Verwendung des dreidimensionalen geometrischen Dichtemodells (305).

2. Anordnung nach Anspruch 1, wobei das Bohrlochwerkzeug ein drahtgebundenes Werkzeug ist.

3. Anordnung nach Anspruch 1, wobei das Bohrlochwerkzeug ein Werkzeug ist, das auf Erfassen während dem Bohren basiert.

4. Verfahren zur Überwachung und Bestimmung der Zementintegrität, Zonenisolierung und Bohrlochintegrität innerhalb von zementierten Bohrlochumgebungen mit einem oder mehreren Strängen unter Verwendung von Ultraschallerfassungs-Logdaten (301) von einem Ultraschallerfassungswerkzeug und dreidimensionalen Röntgendichteerfassungsdaten (303) und Neutronenporositätserfassungsdaten von einem Röntgenzementauswertungs- und Neutronenporositätswerkzeug, wobei beide Werkzeuge in einem Bohrlochwerkzeug aufgenommen sind und bei demselben Strang in einem Bohrloch, das mit Zement verrohrt ist, eingesetzt werden, wobei das Verfahren **dadurch gekennzeichnet ist, dass** es folgende Schritte umfasst:

Verarbeiten der dreidimensionalen Röntgendichte-Logdaten mit Neutronenporositäts-Logdaten, um ein dreidimensionales geometrisches Dichtemodell (305) des Zements als eine Funktion der Tiefe zu erhalten;

Verarbeiten des dreidimensionalen Dichtemodells (305), um ein dreidimensionales akustisches Impedanzmodell zu erhalten;

Invertieren und Verarbeiten (302) der Ultraschallerfassungslog-Rohdaten unter Verwendung des dreidimensionalen geometrischen Dichtemodells (305).

**5.** Verfahren nach Anspruch 4, wobei das Bohrlochwerkzeug ein Drahtseil-basiertes Werkzeug ist.

**6.** Verfahren nach Anspruch 4, wobei das Bohrlochwerkzeug ein Werkzeug auf Grundlage von Logging-while-Drilling ist.

## Revendications

**1.** Agencement pour le contrôle et la détermination d'une intégrité de ciment, d'un isolement par zones et d'une intégrité de puits à l'intérieur d'environnements de forage de puits à train de tige unique ou à trains de tige multiples cimentés comprenant un outil de trou de forage comprenant un outil de diagraphie ultrasonore (101) et un outil d'évaluation de ciment et de porosité neutronique à rayons x (102) déployé sur le même train de tiges dans un trou de forage enrobé de ciment,

dans lequel l'outil de diagraphie ultrasonore est configuré pour produire des données de diagraphie ultrasonores brutes (301) et l'outil d'évaluation de ciment à rayons x et de porosité neutronique est configuré pour produire des données de diagraphie de densité en trois dimensions à rayons x (303) et des données de diagraphie de porosité neutronique et

dans lequel l'agencement est **caractérisé en ce qu'**il comprend en outre :

au moins un mécanisme destiné à traiter les données de diagraphie de densité à rayons x en trois dimensions avec des données de diagraphie de porosité neutronique pour obtenir un modèle de densité géométrique en trois dimensions (305) du ciment en fonction de la profondeur ;

au moins un mécanisme destiné à traiter le modèle de densité en trois dimensions (305) pour obtenir un modèle d'impédance acoustique en trois dimensions ; et

au moins un mécanisme destiné à inverser et à traiter (302) les données de diagraphie ultrasonores brutes au moyen dudit modèle de densité géométrique en trois dimensions (305).

**2.** Agencement selon la revendication 1, dans lequel ledit outil de trou de forage est un outil reposant sur une ligne filaire.

**3.** Agencement selon la revendication 1, dans lequel ledit outil de trou de forage est un outil reposant sur une diagraphie pendant le forage.

**4.** Procédé de contrôle et de détermination d'intégrité de ciment, d'isolement par zones et d'intégrité de puits à l'intérieur d'environnements de forage de puits à train de tige unique ou à trains de tige multiples cimentés au moyen de données de diagraphie ultrasonores brutes (301) à partir d'un outil de diagraphie ultrasonore et de données de diagraphie de densité en trois dimensions à rayons x (303) et de données de diagraphie de porosité neutronique à partir d'un outil d'évaluation de ciment à rayons x et de porosité neutronique dans lequel les deux outils sont compris dans un outil de trou de forage et déployés sur le même train de tiges dans un trou de forage enrobé de ciment, dans lequel le procédé est **caractérisé en ce qu'**il comprend les étapes de :

traitement des données de densité à rayons x en trois dimensions avec des données de diagraphie de porosité neutronique pour obtenir un modèle de densité géométrique en trois dimensions (305) du ciment en fonction de la profondeur ;

traitement du modèle de densité en trois dimensions (305) pour obtenir un modèle d'impédance acoustique en trois dimensions ;

inversion et traitement (302) des données de diagraphie ultrasonores brutes au moyen dudit modèle de densité géométrique en trois dimensions (305).

**5.** Procédé selon la revendication 4, dans lequel ledit outil de trou de forage est un outil reposant sur une ligne filaire.

6. Procédé selon la revendication 4, dans lequel ledit outil de trou de forage est un outil reposant sur une diagraphie pendant le forage.

Fig. 1

**Fig. 2**

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180180765 A1
- US 20180188411 A1
- US 7705294 B2
- US 9817152 B2
- WO 2017023282 A1
- WO 2014186640 A2
- US 20140052376 A1
- US 6876721 B2
- US 4464569 A

- US 5081611 A
- US 8481919 B2
- US 20130009049 A1
- US 8138471 A1
- US 3976879 A
- US 4883956 A
- US 6078867 A
- WO 2016040133 A1